(19) Europäisches Patentamt / European Patent Office / Office européen des brevets

(11) **EP 2 639 525 A1**

(12) **EUROPEAN PATENT APPLICATION**

(43) Date of publication:
**18.09.2013   Bulletin 2013/38**

(51) Int Cl.:
*F24J 2/10* $^{(2006.01)}$

(21) Application number: **12382089.6**

(22) Date of filing: **13.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Termopower S.L.**
**28023 Madrid (ES)**

(72) Inventor: **Carrascosa Pérez, Marco Antonio**
**28023 Madrid (ES)**

(74) Representative: **Illescas, Manuel**
**González-Bueno & Illescas**
**Calle de Recoletos, 13 - 5º Izq.**
**E-28001 Madrid (ES)**

(54) **Heliostat facet and fabrication process thereof**

(57)     This invention refers to technologies for concentrating solar energy and, more specifically, to a sandwich type facet for heliostats which has a front reflective layer (1) made of glass, said front layer being suitable for reflecting sunlight, and a rear supporting layer (3) whose structure and construction materials present a product of their Young's modulus (E) times their inertia in at least one axis (Ixx,yy) which is substantially equal to those of the front reflective layer (1), so: $E_{\text{front layer}} \cdot I_{\text{XXfront layer}} = E_{\text{rear layer}} \cdot I_{\text{XXrear layer}}$ and where additionally, the thermal dilation coefficient of both the front (1) and rear (3) layers is substantially equal, so:

$$CT_{\text{front layer}} = CT_{\text{rear layer}}.$$

High yield thermoplastic
15mm

Embedded round
nut M8

Mirror 3 mm

PU 40 mm

Weight 42 Kg.

**Fig. 2**

**Description**

**FIELD OF INVENTION**

The present invention has applications in technologies for concentrating solar power (for example, parabolic cylinder, central receptor, Fresnel collector and/or disc) and more specifically, heliostat plants with a central tower receptor in which, preferably, more than two thirds of the heliostats are at more than 700m from the receptor.

**BACKGROUND OF THE INVENTION**

The generation of power by means of solar concentration is nowadays conditioned by the need to reduce its production costs. Within the possible options for cutting production costs for generating power using this technology, the most important one is the improvement to the performance of the solar field components, as the other components are at a much more advanced technological level.

Nowadays, there are several types of facets in the technology of fields of heliostats which present problems in the state of the art (these facets being the component parts of the reflective surface of the heliostats) , namely problems in function or execution when they are used in applications at large distances and, thus, require a high level of optical quality and stability.

The first typology described in the state of the art are the facets formed of reflective glass elements, which are then attached to a steel frame by a gluing process and later a curing of the adhesive. This is the case in the invention described in patents ES 2326586 and US 4611090. This first typology of facets has two basic problems for the applications mentioned. The first is the difference in the dilation coefficient of the component materials. Although the two materials are joined by a more or less elastic adhesive, there is a compromise, because it cannot be too elastic so that it works when exposed to winds, with acceptable deformations. Thus, whenever there is a change in working temperature in the said facet, this changes its curvature one way or the other, depending on whether the temperature rose or fell. In the case of a facet for large distances which must approach a plane facet, this effect can even make the reflective surface convex.

The second important effect on this type of facet is the difficulty in obtaining the optical quality required in a process where the precision needed is very hard to achieve with a stamped steel frame and, thus, there are significant differences in the thickness of the adhesive. This brings about different tensions in the glass once the adhesive ages. The difficulty in achieving the required optical quality is due to all these factors.

The second typology corresponds to unbalanced "sandwich" type facets. Patent US2988959 shows an invention in which the whole facet is formed of high precision mechanised glass to obtain the required curvature. There are separators between the top and bottom glass layers which are placed perpendicularly to the said plaques and joined to these by an epoxy resin or some other type of adhesive. No way of connecting this element to a holding structure is specified. In the case of having to attach the facet directly to the structure of a heliostat, the difference between the coefficients of thermal expansion would make the system unviable, and also rather un-robust for outdoor applications. It is also important to bear in mind that during the operation a facet would have a different temperature to that of the reflector and the rest of the elements that make up the facet because the former does not usually have 100% reflectivity but rather 93%, and the other elements are in the shade. A configuration such as is proposed in this invention, together with elements with similar characteristics to those of glass, could undergo high tensions as it does not contain any intermediate elastic element with the differences mentioned above.

Patent US 7077532, presents the invention of a sandwich facet formed by a first layer of a laminated reflective element on a metallic support of carbonated steel, a central piece made up of a honeycomb in aluminium or foam, and a lower layer of carbonated steel. This configuration is not symmetrical either thermally nor mechanically, as the surface glass has a different dilation coefficient to the steel plaques. In the same way, the rigidity of the glass and the upper layer is different to the rigidity of the plaques underneath, which means that differences in temperature can affect the curvature and precision of the facet. To minimise this effect, the execution should use glass of a low thickness and plaques of a determined minimum thickness which would allow to compensate the tendency of the asymmetric part of the glass. Glass of a low thickness (approx. 1 mm) attached to the two plaques and the laminate make the product uncompetitive in terms of cost and rather complicated in terms of the manufacturing process.

The facets related to the present invention are part of the concentration chain of a tower plant and are, more specifically, the reflective elements integrated in each structure with a capacity to follow the sun on two axes and which we call a heliostat. The big tower stations with powers of over 100 MW can use heliostats at a distance of up to 1500m from the receptor. The number of heliostats is very large and mainly depends on the reflective surface employed (dimension and number of facets per heliostat) and on the optic quality of said heliostats. The optic quality of the heliostat is conditioned by the configuration and structural behaviour of the heliostat and, at the same time, by the precision and variation in time of the reflective surface made up by the collection of facets installed in the same.

As we have seen, central receptor stations with high power require a quantity of energy reflected by the heliostats sufficient to need to install them at distances of 1500m or more. At such a large distance, the image of a perfect facet has a diameter of over 12m, depending on the size of the facet. When what is at this distance is not a facet but a heliostat made up of a certain number of facets and with dimensions usually much greater than the facet itself, the energy usable by the receptor and its yield are completely linked to the optical quality of the facet and the heliostat. The optical quality of the heliostat is achieved by its structural design and the process of placing the facets. The placing or curvature of the facets is the procedure in which al the facets in a heliostat are aligned in such a way that they have a common focus. Thus, and by the inclination of the facet on two axes, it is possible to make the corner facet of a heliostat point at the same point in space as the central facet of the heliostat. The optical quality of the heliostat is therefore the precision with which said facet follows a nominal geometry, bearing in mind ondulation effects and how said precision changes over time for any condition of operation where temperature and wind speed are different. We must also bear in mind that the facet is supported by the structure of the heliostat, so the interaction with the latter and the means of attachment will also have consequences on the final optical behaviour of the facet.

Optically, the further away a heliostat is from the central receptor, the greater its radius of curvature should be. Keeping in mind that the focal distance of a facet with radius R is approximately R/ 2, a facet functioning in a heliostat at a distance of over 1000m needs radiuses of curvature equal to or greater than 1000m. The same is true for a facet functioning at 1500m. The effect of a radius of curvature less than that needed for a distant facet is very negative, as its focal point is distanced from the receptor and this drastically reduces the usable energy in the same. Similarly, a convex curvature in a facet produces a divergent dispersal of the reflected rays with very negative effects for distant heliostats (over 1000m from the receptor) .

Given the need to cut costs, the problem of developing large stations with a central receptor with a minimum possible number of heliostats in the solar field is now being addressed, because each heliostat requires two gyration mechanisms, a control, a base, connections etc. This need leads us directly to the use of heliostats with large reflective surfaces, which allows us to minimise the number of heliostats in the solar field compared with smaller heliostats. For cost cutting to be effective, it is important that large heliostats have good optical quality, because otherwise the reduction in the number of heliostats would not be proportional to their size.

In large heliostats as in the case of heliostats with reflective surfaces of over 100 m$^2$, said surface is made up of a number of facets greater than 25 or 30, so that each one can be aimed at the same point, by means of the indicated placing process so as to increase the density of the reflected energy and thus its usability. This division of facets can be achieved with reflective elements of between 2.5 and 3.5 metres, for example, which means that the dimensions of a rectangular facet would be between 1.5 and 2 m. Bearing in mind the previously disclosed features, a facet that needs a radius of curvature of 1500m and that has a dimension of 2m would be practically plane. The difference between the points and the centre would in theory be less than 0.33mm. Small variations in the curvature of the facet due to homogeneous or non-homogeneous changes in the temperature of the facet might cause enormous optical errors because the focal point comes closer if the facet curves more than it should, or because it changes to convex geometry if the effect is the opposite. In the same way, in the case of variations in the curvature induced by different behaviours of the heliostat structure (rather than the facet), the effect would be worse the further away said heliostat is from the receptor.

Thermoelectric solar stations are usually found in places near or even in desert areas. These locations characteristically experiment large differences in temperature during the day and according to the seasons of the year. Added to this is the need to operate in conditions with gusts of wind of up to 18m/s. The facets are the elements which bear the pressure of the wind directly, and as previosly said, they must maintain their geometry in such conditions. So this raises the problem of using facets of a high optical quality with "Slop Error" less than 1.2 mrad, but at the same time rigid enough against the pressure of the wind, and which do not modify their geometry at different temperatures once mounted on the heliostat. The processes and materials need to be industrialisable at high capacity, and also simple enough to meet necessary costs.

This invention is presented as a solution to the problems in the state of the art mentioned above.

## BRIEF DESCRIPTION OF THE INVENTION

The object of this invention is a sandwich type facet which is totally balanced, in which there are no modifications in its geometry due to changes in temperature, albeit in the facet itself or in the structure to which it is normally solidly attached. To manage to obtain a balanced facet, this invention is based on a disposition in which a reflective element is used, preferably of glass with silver mirrors and protected at the back, an intermediate foam element preferably made of injected polyurethane, and a rear mechanism preferably made of a thermoplastic loaded with fibre glass in which the product of the inertia in each of the axes which make up the plane of the mechanism according to Young's modulus for said thermoplastic is equal to said product in the upper glass and, additionally, where the coefficients of thermal dilation of the front and rear components are substantially equal.

With this design it is ensured that the front and rear parts govern the behaviour of the intermediate foam symmetrically, leaving a distribution of cutting tensions in the foam symmetrical to the central axis and thus limiting possible changes in geometry due to differences in temperature.

Furthermore, to avoid tensions due to the different coefficients of dilation of the metal structure which makes up the heliostat, the facet is given, preferably, four points of attachment with a spherical ball and socket joint to allow us to keep the facet rigidly fixed at height Z, assuming small turns in the fixing screws due to differential dilation effect but without transmitting stresses to the facet which can originate deformations.

The component is preferably manufactured using a process of injection in which the components are integrated, controlling the final geometry by means of temperature control of the moulds, the curvature of the same, and especially the temperature of the mirrored glass compared with the rear grid of the polymer.

As a preferred embodiment of the invention, the sandwich type facet for heliostats has a front reflective layer which comprises glass, this front layer being suitable for reflecting solar radiation, and a rear layer for support whose structure and construction material presents a product of its Young's modulus (E) times its inertia in at least one axis ($I_{XX(YY)}$), substantially equal to those in the front reflective layer, thus:

$$E_{\text{front layer}} \cdot I_{XX(YY) \text{ rear layer}} = E_{\text{front layer}} \cdot I_{XX(YY) \text{ rear layer}}$$

and where additionally, the thermal dilation coefficient of both front and rear layers is substantially equal, thus:

$$CT_{\text{front layer}} = CT_{\text{rear layer}}.$$

As a preferred embodiment of the invention, the structure and construction material of the front layer presents a product of its Young's modulus times its inertia in two axes substantially equal to those in the front reflective layer, thus:

$$E_{\text{front layer}} \cdot I_{XX \text{ front layer}} = E_{\text{rear layer}} \cdot I_{XX \text{rear layer}};$$

$$E_{\text{front layer}} \cdot I_{YY \text{ front layer}} = E_{\text{rear layer}} \cdot I_{YY \text{rear layer}}.$$

In the context of this invention, the phrase "substantially equal", as applied to the correlation of two magnitudes or products, should be interpreted as a value for said magnitudes or products in which the quotient between the two is between 0.9 and 1.1, preferably between 0.95 and 1.05, or more preferably equal to 1.

As a preferred embodiment of this invention, between the front reflective layer and the rear supporting layer, the facet comprises an intermediate layer manufactured using a polymer compound and adhered to the rear surface of the front reflective layer and to the front surface of the rear supporting layer.

As a preferred embodiment of this invention, the coefficient of thermal dilation of the intermediate layer must be substantially greater than that of the coefficient of thermal dilation of the front and rear layers thus: $CT_{\text{intermediate layer}} >> CT_{\text{front layer}}$, $CT_{\text{intermediate layer}} >> CT_{\text{rear layer}}$.

As a preferred embodiment of the invention, the polymer compound is to be selected from polyurethane or polycarbonate.

As a preferred embodiment of the invention, the rear supporting layer is to be a discontinuous piece.

As a preferred embodiment of the invention, the rear supporting layer is to be a net or grid.

As a preferred embodiment of the invention, the rear supporting layer is to consist of a net or grid made of thermoplastic material, reinforced with fibre glass in a quantity sufficient that the dilation coefficient and/or the rigidity coefficient of the rear supporting layer are substantially equal to those of the glass that makes up the front reflective layer.

As a preferred embodiment of the invention, the thermoplastic material is polyethylene (PET).

As a preferred embodiment of the invention, the thermoplastic material also contains fibre glass, preferably in a 40-45%.

As a preferred embodiment of the invention, the intermediate layer is partly embedded in the net which makes up the rear supporting layer.

As a preferred embodiment of the invention, the rear supporting layer contains glass.

As a preferred embodiment of the invention, at least the reflective surface has a curvature or bend.

As a preferred embodiment of the invention, joints or attachments to the heliostat structure are provided on the back part of the reflective element, preferably joined or attached to the rear supporting layer.

As a preferred embodiment of the invention, the joints or attachments to the heliostat structure allow the said joint to adapt to the curvature or bend of the facet to optimise the reflection of sunlight.

As a preferred embodiment of the invention, the joints or attachments to the rear part of the facet are completely or partly embedded in the intermediate layer.

As a preferred embodiment of the invention, the joints or attachments comprise spherical ball and socket joints.

As a preferred embodiment of the invention, the means of joining or attaching to the heliostat structure are adhesives.

Another object of this invention refers to a heliostat that comprises a plurality of facets as described in the embodiments in this document.

Another object of this invention refers to a procedure for manufacturing facets which includes controlling the conformed temperature of the front reflective layer and the rear supporting layer so as to achieve a certain curvature of the facet.

As a preferred embodiment of the invention, the procedure consists in the following steps:

- The front and rear layers of the facet are loaded onto a plate in the injection press, after separating them.
- The intermediate layer is injected between the front and rear layers
- The curvature of the final facet is controlled by controlling the temperature of the front and rear layers used, and by controlling the temperature of the plates in the injection press during the process.

As a preferred embodiment of the invention, the temperature of the conforming or polymerisation of the intermediate layer between the front and rear layers is also controlled so as to achieve a certain curvature of the facet.

As a preferred embodiment of the invention, the curvature of the rear supporting layer is different in the X axis to the Y axis.

Another object of this invention refers to facets directly obtainable by a process such as is described in this document.

Finally, having explained the objects of the invention, we can again mention its main advantages compared with the state of the art:

1. totally balanced design to maintain geometry at any temperature range.
2. reduced weight per facet surface.
3. system of attachment to the heliostat structure with separation of tensional elements in thermal dilation.
4. production system with high precision curvature by controlling differences in temperature.
5. the possibility of controlling geometry in facets with a low curvature (large radius) for use in large-scale stations.
6. flexibility in the control of different curvatures in both axes to permit round, parabolic or cylindrical facets.
7. a process which allows us to obtain reflective surfaces of large curvature radius, also guaranteeing high precision optical behaviour.

Other characteristics and advantages of this invention may be derived from the detailed description of the invention and from the illustrating figures which go with it.

**DESCRIPTION OF THE FIGURES**

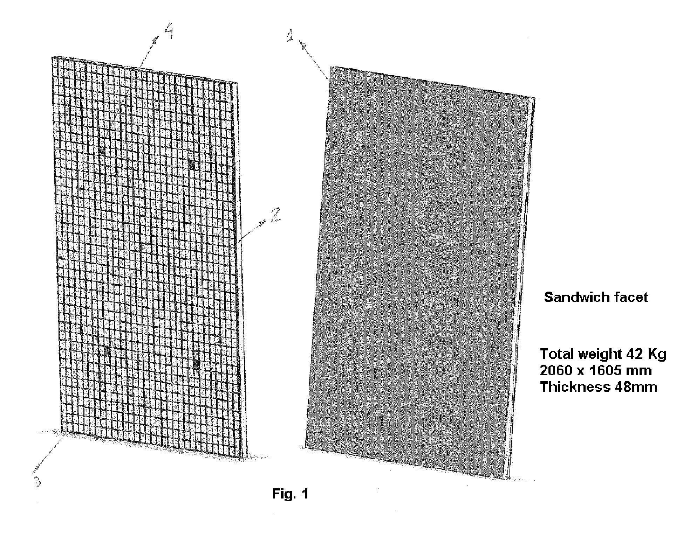

Figures 1-11 show preferred aspects of facets according to the aims of this invention.

**DETAILED DESCRIPTION OF THE INVENTION**

The facet according to the invention is made up of a reflective layer (1) (Figure 1) preferably made of monolithic glass by a floating of thickness of 1 to 4mm, preferably 3mm, with an integrated hemispheric reflectivity of between 92% and 95%. The rear part of the reflective glass has a sufficient number of protective layers, preferably paint and copper to prevent the reflective silver deposit from corroding. The facet also comprises a rear supporting layer of grid type (3) (Figure 1) made of technical plastic loaded with fibre glass (2) (Figure 1) in which, preferably, four fixing systems are inserted and adjusted (4) (Figure 1) to connect with the heliostat structure of which they form part. The technical plastic to be used, although this does not rule out others, is of the polyethylene type (PET) with fibre glass (FG) or polycarbonate with FG. The fibre glass load will be between 40% and 55% to obtain a dilation coefficient of between $8.5 \cdot 10^{-6}$ and $10.5 \cdot 10^{-6}$. The facet has a layer or central body made of rigid polyurethane (PU) which is adhered to the last layer of protective mirror glass on one side, and, on the other, partially or totally inserted into the thermoplastic grid which makes up the rear part of the facet.

The rear supporting layer will behave mechanically in equivalence to the mirror glass which makes up the upper layer. This equivalent mechanical behaviour means that for the same loads, be they due to mechanical or thermal influence, the deformation of both components will be the same.

To achieve this balance, it is necessary for the product of Young's modulus times the inertia of the profile in both axes (E*Ixx and E*Iyy) to be the same for the upper part of the glass and for the rear support. Additionally, and due to the need for optical precision required in these components, the similarity in the dilation coefficient in the upper and lower parts favours the lack of deformations from the effect of homogeneous or non-homogeneous temperature changes. It is important to bear in mind that to maintain the geometric stability (balanced facet) with changes in temperature, both conditions must be met. For example, a facet of 1 mm glass on the upper part and 4mm glass on the lower part would not be geometrically stable and would change curvature even though both parts have the same CT (thermal dilation coefficient).

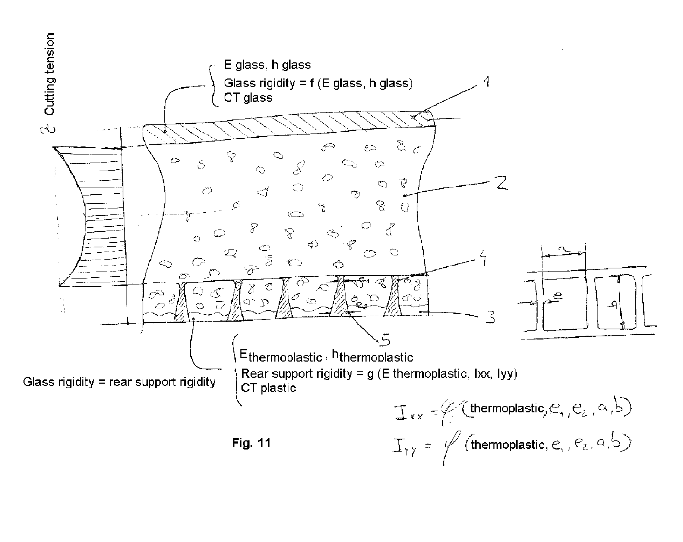

The polyeurethane foam has a much higher CT than that of the glass and the rear support, so that when it dilates it forces the latter producing curvature unless both parts react to this pressure in a balanced or symmetrical way. Figure 11 shows the proposed symmetry which together with a similarity in the dilation coefficients makes the facet balanced. In general, these conditions will be met in a balanced facet:

$$CT_{PU} >> CT_{GLASS,}$$

$$CT_{PU} >> CT_{THERMOPLASTIC,}$$

$$CT_{GLASS} = CT_{THERMOPLASTIC,}$$

$$E_{GLASS}*I_{XX\ GLASS} = E_{THERMOPLASTIC}*I_{XXTHERMOPLASTIC,}$$

$$E_{GLASS}*I_{YY\ GLASS} = E_{TERMOPLASTICO}*I_{YYTHERMOPLASTIC.}$$

Although the above example refers to a facet integrated by a front reflective glass part, a rear thermoplastic supporting part and polyurethane foam, the same conditions are applicable to other combinations of materials and/or structures, and meeting the conditions guarantees balance and coherence of the components of the facet. This design would produce a distribution of tangential tensions or symmetric cuts in the facet, thus maintaining the original geometry of the facet whatever homogeneous change in temperature (positive or negative) took place in the field operation of the component.

For a good dimensional and weight integration, the proposed thermoplastic grid should have a Young's modulus of between 8.000 and 20.000 MPa with a breakage tension of between 80 y 160 MPa.

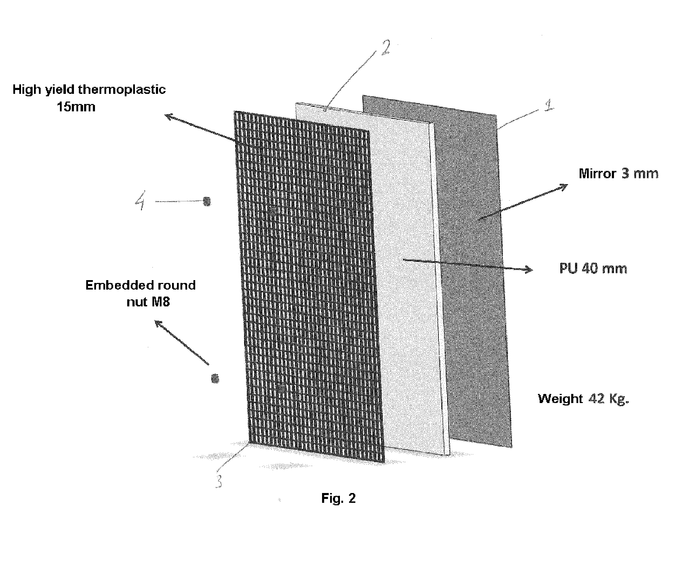

Once integrated the facet has a height of less than 50mm, of which 3mm correspond to the mirror glass, 35mm correspond to the PU surface which is not inserted into the rear grid, and 12mm to the rear thermoplastic grid. A cross-section of the components which make up the facet is shown in In Figure 2.

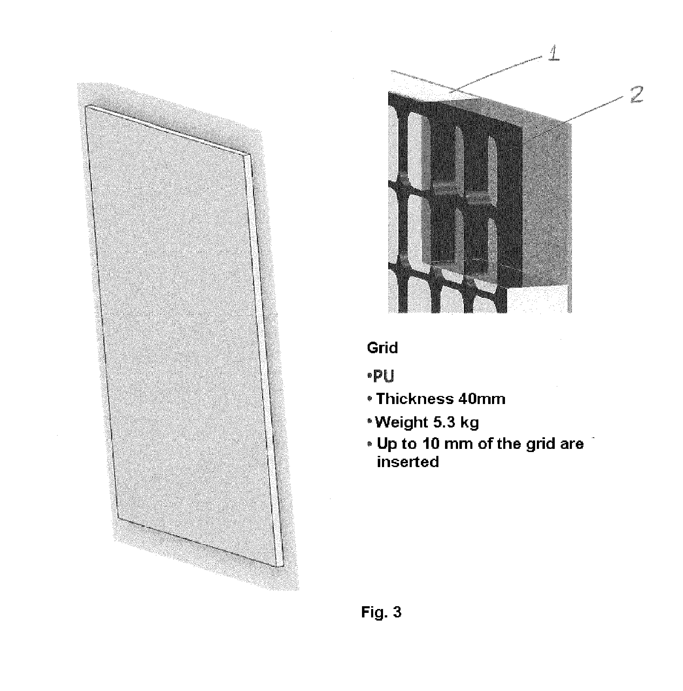

Figure 3 depicts how the PU (1) (Figure 3) penetrates the spaces in the grid (2) (Figure 3) during the foaming process, filling them completely or partially.

As we shall see later in the process for correct foaming of the PU, the grid is loaded in the upper part of the mould so that it is the last phases of foam expansion which fill in the grid.

The polyurethane used should preferably have a density of between 40 and 65 kg/m$^3$. The mechanical properties of said foam are much less than those of the upper glass and the rear thermoplastic in terms of Young's modulus, so it is these latter which control the behaviour of the sandwich and the central polyurethane body.

The rear grid should preferably be square, although it can be honeycomb shaped or even rectangular if for a functional optical need a different starting rigidity and curvature are required in the zenith axis than in the azimuth axis. Due to the manufacturing process to be described later, a grid with a different inertia in the XX axis from that in the YY axis would allow us to make facets with different curvature in these axes. Thus, the making of cylindrical, spherical and parabolic facets can be achieved by using this design and the process, as we will describe further on.

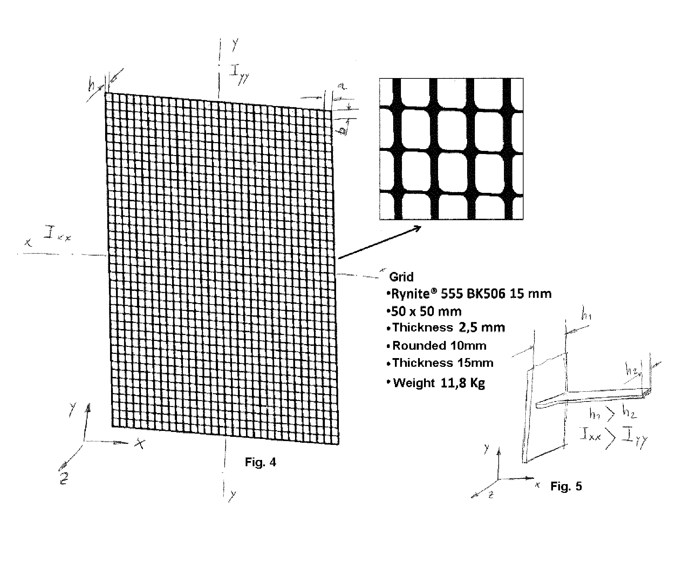

As a variation on the design of the rear thermoplastic support, a different rigidity in both axes can also be achieved by means of a difference in height h1 and h2 as shown in Figure 5, which produce a difference in the inertia of both axes $Ixx \neq Iyy$. This effect would allow us to control the curvature of one axis of the facet depending on the temperature in a different way to the other axis.

The reflective surface of the heliostat consists of a matrix of facets as described in this invention. Usually, the facets are solidly mounted on a metal structure made of low alloy carbonated steel. The dilation coefficient of this material is approximately $12.5*10^{-6}$ °C$^{-1}$. Bearing in mind that the coefficient of the monolithic glass is $9*10^{-6}$ °C$^{-1}$ and that the usual dimensions of these facets are of up to 2500mm, a difference in temperature of 50°C would produce a differential distance of between 0.25 and 0.5mm, depending on the separation of the attachment points on the facet. This difference in dimension due to differential thermal effects would produce tensions in the facet's attachment which would finally be transmitted to the facet itself causing the geometrical variation associated with this effect. For near facets, these variations are not very important, but they are for facets further away (up to 2000m), such as those covered in this invention.

To solve this problem, the objective facet in this invention preferably incorporates four or more systems of attachment with a ball and socket joint, which allow us to assume these differences while maintaining the facet's position at all times. At the same time, they allow us to fix the facet at an incline to the horizontal structure due to its curvature without having to include intermediate elements to attach two surfaces that form an angle.

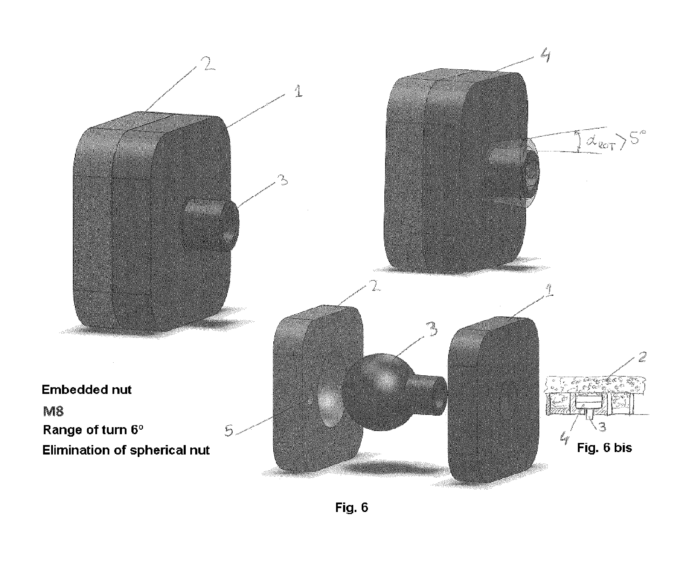

Figure 6 shows the attachment inserts and in Figure 6b, how they are attached to the thermoplastic grid, being fixed completely after the injection and foaming of the polyurethane.

The ball and socket attachment insert 4 (Figure 6) has an interface with an interior nut onto which a fixing screw is attached, and which can be turned up to 5° in any direction on the screw axis and 360° on its own axis. Two planes (not visible in the Figures) are put in practice to block turning on its own axis as is necessary.

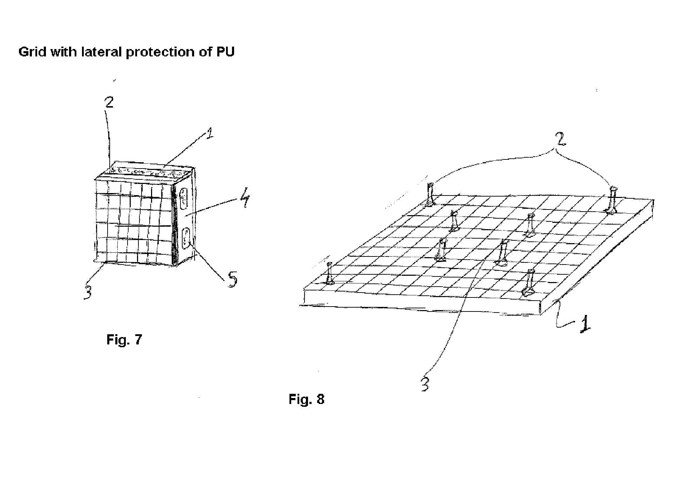

Another variation in design is shown in Figure 7, where the thermoplastic grid (3) (Figure 7), covers the polyurethane (2) (Figure 7) laterally by means of perimetral wings (4) (Figure 7) which have windows (5) (Figure 7) for overspill during the polyurethane injection.

In another variation (not in the Figures) the exposed part of the polyurethane is protected with paint which is resistant to humidity and ultraviolet radiation (UV) or with polyamide based cloth or some other material which is resistant to UV, humidity and mechanical aggression.

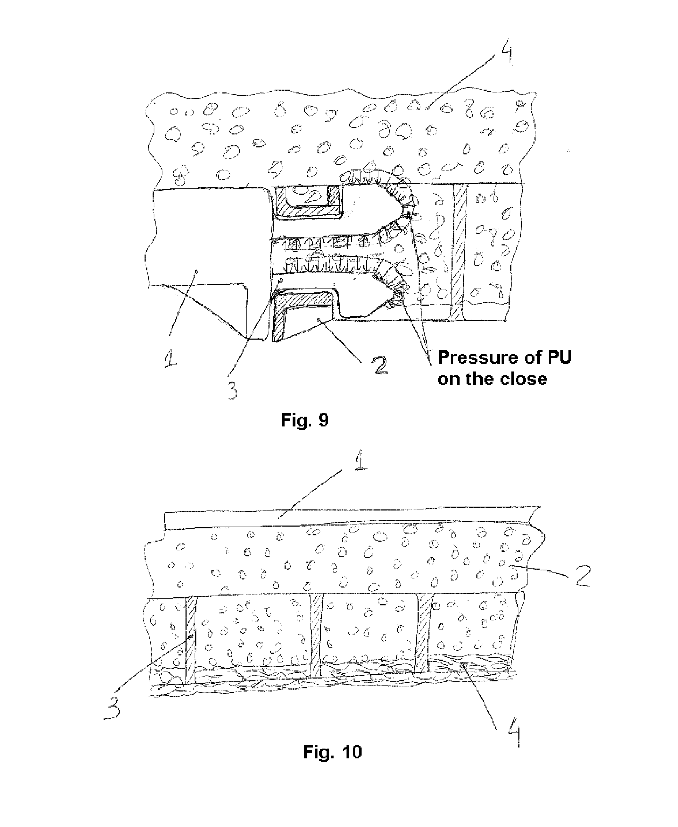

The dimensions of the proposed facets can reach up to 2500mm for the main axis. This measurement may cause problems when manufacturing the rear thermoplastic grids. To avoid said problems, two alternative designs are proposed in Figures 9 and 10.

Figure 9 shows a facet where the thermoplastic grid is divided up into two or more parts and clipped rigidly together, and then reinforced by the polyurethane when injected. The grid (1) (Figure 9) contains the male part of the clip (3) (Figure 9) facilitating its function and improving the rigidity of the joint.

Another alternative shown in Figure 10 is the combined use of thermoplastic (3) (Figure 10) in the rear grid, reinforced with fibre glass (4) (Figure 10) at the back and in the spaces in the grid itself.

The production process for this facet is designed so that a large number can be manufactured in series and with high precision. The floated and mirror glass enters the process as a finished product, as does the rear thermoplastic support configured as corresponds to the end product.

All the components are loaded in a press whose plates have temperature control and a suitable shape for the geometry required.

The components are preferably loaded onto the injection press plate, after separating them. This separation may be achieved by means of added foam components, or by integrating the separators into the plate support as shown in Figure 8. The grid (1) (Figure 8) has perimetral separators (2) (Figure 8) incorporated into the piece itself, made by thermoplastic injection, and some central separators (3) (Figure 8) distributed in such a way and quantity as is necessary to keep the components in place during the injection and foaming process.

Once the components are in place and the injection press is closed, they are injected as a stequiometric mixture, which forms the foamed polyurethane via exothermal reaction.

The control of the end product facet's curvature is achieved by controlling the temperature of the components in the process and by controlling the temperature of the plates of the injection press during the process. Due to the isotropy of the contraction of these materials, this physical effect is one of the best ways of curving parametrically and without discontinuations in the facet. A difference in temperature between the upper and lower parts during the manufacturing process will produce a very continuous curve in both axes as the tensions which produce the said curvature arise from a physical contraction of the materials which is homogeneously spread along the axes of the piece.

The end product is a piece with very good optical quality due to the homogeneity of the curvature force, the continued rigidity of the facet, and the equivalent mechanical behaviour of the upper mirror part and the lower rear support during the foaming process.

The change in temperature in the mirror glass will produce a different curvature as can be seen in the following simulation in which the temperature of the upper part of the glass has been altered from that of the other components, for a balanced facet in which rigidity and CT in the upper and lower parts is the same.

The injection and design of the component is carried out so that the fibre glass used as a load in the thermoplastic is orientated along the two main dilation axes (X and Y). Thus the control of the parallel dilation coefficient of the thermoplastic can be achieved.

Having described this invention and some of its preferred embodiments, together with its main advantages over the state of the art, it should be again emphasised that its application is not to be understood as necessarily limited to a predetermined configuration of the elements or the procedure described, nor to the creations referred to in the examples in this invention, but rather that it is also applicable to other types of configurations and procedures, by adequate changes in the elements, as long as said changes do not alter the essence of the invention and the object of the same.

**Claims**

1. Sandwich-style facet for heliostat **characterised in that** it has a front reflective layer made of glass, this front layer being suitable for reflecting solar radiation, and a rear supporting layer whose structure and construction materials present a product for their Young's modulus times their inertia in at least one axis substantially equal to that of the front reflective layer such that: $E_{front\ layer} \cdot I_{XX\ front\ layer} = E_{rear\ layer} \cdot I_{XXrear\ layer}$ and where additionally, the thermal dilation coefficient of both the front and rear layers is substantially equal, so: $CT_{front\ layer} = CT_{rear\ layer}$.

2. A facet according to the previous claim where the structure and construction materials present a product for their Young's modulus times their inertia in two axes substantially equal to that of the front reflective layer such that:

$$E_{front\ layer} \cdot I_{XX\ front\ layer} = E_{rear\ layer} \cdot I_{XXrear\ layer;}$$

$$E_{front\ layer} \cdot I_{yy\ front\ layer} = E_{rear\ layer} \cdot I_{yyrear\ layer}.$$

3. A facet according to any of the previous claims which comprises an intermediate layer between the front reflective layer and the rear supporting layer, preferably made of a polymeric compound adhered to the back surface of the reflective layer and to the front surface of the supporting layer.

4. A facet according to the previous claim wherein the thermal dilation coefficient of the intermediate layer is substantially higher than the thermal dilation coefficients of the front and rear layers, thus: $CT_{intermediate\ layer} >> CT_{front\ layer}$ and $CT_{intermediate\ laye} >> CT_{rear\ layer}$.

5. A facet according to any of claims 3 to 4 wherein the polymeric compound is chosen from polyurethane or polycarbonate.

6. A facet according to any of claims 1 to 5 **characterised in that** its rear supporting layer is a discontinuous sheet.

7. A facet according to claim 6 **characterised in that** its rear supporting layer is a grid or net.

8. A facet according to any of the previous claims **characterised in that** its rear supporting layer is a thermoplastic material reinforced with fibre glass.

9. A facet according to claim 8 **characterised in that** the thermoplastic material is polyethylene (PET).

10. A facet according to any of claims 8 to 9 **characterised in that** the thermoplastic material also comprises fibre glass, preferably in the range of 40%-50% of the total weight of the grid or net which makes up the rear supporting layer.

11. A facet according to any of claims 3 to 10 **characterised in that** the intermediate layer is partially embedded in the grid or net which makes up the rear supporting layer.

12. A facet according to any of claims 1 to 11 **characterised in that** the rear supporting layer comprises glass.

**13.** A facet according to any of claims 1 to 12 **characterised in that** at least the reflective layer has a curvature or bend.

**14.** A facet according to any of claims 1 to 13 **characterised in that** means of joining or attaching to the heliostat structure are provided on the back part of the reflective element, preferably fixed or attached to the rear supporting layer.

**15.** A facet according to claim 14 **characterised in that** the means of joining or attaching to the heliostat structure allow said joint to adapt to the curvature or bend of the facet and so optimise the reflection of sunlight.

**16.** A facet according to any of claims 14 and 15 **characterised in that** the joint or attachment of the means of joining or attaching to the rear part of the facet is totally or partially embedded in the intermediate layer.

**17.** A facet according to any of claims 14 to 16 **characterised in that** said means of joining or attaching are spherical ball and socket joints.

**18.** A facet according to claim 14 **characterised in that** the means of joining or attachment to the heliostat structure are adhesives.

**19.** A heliostat which comprises a plurality of facets according to any of claims 1 to 18.

**20.** Procedure for the manufacture of facets according to any of claims 1 to 17 which comprises the step of controlling the conformed temperature of the front reflective layer and of the rear supporting layer so as to achieve a determined curvature of the facet.

**21.** A procedure according to claim 20 where:

- the front and rear layers of the facet are loaded onto a plate of the injection press after separating them previously;
- an intermediate layer is injected between the front and rear layers;
- the final curvature of the facet is controlled by controlling the temperatures of the front and rear layers used, and by controlling the temperature of the plates in the injection press during the process.

**22.** A procedure according to claim 21 in which, additionally, the temperature of the conformed or polymerised intermediate layer between the front and rear layers is also controlled, so as to achieve a determined curvature of the facet.

**23.** A procedure according to claim 22 **characterised in that** when the rear supporting layer comprises a thermoplastic polymer reinforced with fibre glass, the fibres used as a load in the thermoplastic are orientated along the two axes (X and Y) of main dilation, thus controlling the parallel dilation coefficient of the thermoplastic and obtaining a curvature in the rear supporting layer different in the X axis to the Y axis.

**24.** Facets directly obtainable by a procedure according to any of claims 19 to 23 which offer an improved optical quality due to the homogeneity of the curvature, the continuity of rigidity and the equivalent mechanical behaviour of the front reflective layer and the rear supporting layer.

**25.** A heliostat which comprises a plurality of facets according to claim 23.

**Sandwich facet**

**Total weight 42 Kg**
**2060 x 1605 mm**
**Thickness 48mm**

Fig. 1

High yield thermoplastic
15mm

Embedded round
nut M8

Mirror 3 mm

PU 40 mm

Weight 42 Kg.

Fig. 2

Grid

• PU
• Thickness 40mm
• Weight 5.3 kg
• Up to 10 mm of the grid are
  inserted

Fig. 3

Fig. 4

Grid
- Rynite® 555 BK506 15 mm
- 50 x 50 mm
- Thickness 2,5 mm
- Rounded 10mm
- Thickness 15mm
- Weight 11,8 Kg

Fig. 5

Embedded nut
M8
Range of turn 6°
Elimination of spherical nut

Fig. 6 bis

Fig. 6

**Grid with lateral protection of PU**

Fig. 7

Fig. 8

**Pressure of PU
on the close**

Fig. 9

Fig. 10

E glass, h glass
Glass rigidity = f (E glass, h glass)
CT glass

Cutting tension

$E_{thermoplastic}$, $h_{thermoplastic}$
Rear support rigidity = g (E thermoplastic, Ixx, Iyy)
CT plastic

Glass rigidity = rear support rigidity

$$I_{xx} = \varphi \left( thermoplastic, e_1, e_2, a, b \right)$$

$$I_{yy} = \varphi \left( thermoplastic, e_1, e_2, a, b \right)$$

**Fig. 11**

Europäisches
Patentamt

European
Patent Office

Office européen
des brevets

# EUROPEAN SEARCH REPORT

Application Number

EP 12 38 2089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2 988 959 A (PELKEY EDWIN M ET AL) 20 June 1961 (1961-06-20) * figures 1-4 * * column 1, line 12 - line 16 * * column 2, line 12 - line 14 * * column 2, line 58 - line 61 * ----- | 1-3,12, 13 | INV. F24J2/10 |
| A | US 2010/043779 A1 (INGRAM JOHN CARROLL [US]) 25 February 2010 (2010-02-25) * figures 1, 3 * * paragraph [0002] * * paragraph [0032] * ----- | 1-25 | |
| A | US 5 151 827 A (VEN KARI K M [BE] ET AL) 29 September 1992 (1992-09-29) * figure 1 * * column 2, line 59 - column 3, line 13 * ----- | 1-25 | |
| A | EP 2 206 991 A2 (GUARDIAN INDUSTRIES [US]) 14 July 2010 (2010-07-14) * paragraph [0103] * * paragraph [0097] * ----- | 1-25 | TECHNICAL FIELDS SEARCHED (IPC) F24J |
| A | GB 2 104 444 A (GLAVERBEL [BE]) 9 March 1983 (1983-03-09) * figures * ----- | 1-25 | |

The present search report has been drawn up for all claims

| Place of search | Date of completion of the search | Examiner |
|---|---|---|
| The Hague | 11 October 2012 | Fernandez Ambres, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

**ANNEX TO THE EUROPEAN SEARCH REPORT**
**ON EUROPEAN PATENT APPLICATION NO.**                EP 12 38 2089

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2012

| Patent document cited in search report | | Publication date | Patent family member(s) | | Publication date |
|---|---|---|---|---|---|
| US 2988959 | A | 20-06-1961 | NONE | | |
| US 2010043779 | A1 | 25-02-2010 | US | 2010043779 A1 | 25-02-2010 |
| | | | WO | 2010021987 A2 | 25-02-2010 |
| US 5151827 | A | 29-09-1992 | AU | 644165 B2 | 02-12-1993 |
| | | | AU | 7716191 A | 21-11-1991 |
| | | | BE | 1004267 A3 | 20-10-1992 |
| | | | CN | 1057527 A | 01-01-1992 |
| | | | ES | 2035772 A1 | 16-04-1993 |
| | | | US | 5151827 A | 29-09-1992 |
| EP 2206991 | A2 | 14-07-2010 | EP | 2206991 A2 | 14-07-2010 |
| | | | US | 2010229853 A1 | 16-09-2010 |
| GB 2104444 | A | 09-03-1983 | BE | 893050 A1 | 03-11-1982 |
| | | | DE | 3216844 A1 | 03-03-1983 |
| | | | ES | 265557 U | 16-12-1982 |
| | | | ES | 8306688 A1 | 16-09-1983 |
| | | | FR | 2511775 A1 | 25-02-1983 |
| | | | GB | 2104444 A | 09-03-1983 |
| | | | JP | 5048443 B | 21-07-1993 |
| | | | JP | 58035360 A | 02-03-1983 |
| | | | US | 4465734 A | 14-08-1984 |

EPO FORM P0459

For more details about this annex : see Official Journal of the European Patent Office, No. 12/82

**EP 2 639 525 A1**

## REFERENCES CITED IN THE DESCRIPTION

**Patent documents cited in the description**

- ES 2326586
- US 4611090 A
- US 2988959 A
- US 7077532 B